# EUROPEAN PATENT APPLICATION

(11) **EP 4 389 939 A2**
(43) Date of publication of application: **26.06.2024**
(21) Application number: 23219566.9
(22) Date of filing: 21.12.2023
(51) Int. Cl.: C25B 3/20, B01J 19/00, C25B 9/60

(54) **ELECTROCHEMICAL SYNTHESIS OF MOLECULES ON A SURFACE**

(30) Priority: 23.12.2022 EP 22216633
(71) Applicant: Imec VZW, 3001 Leuven (BE)
(72) Inventor: DONNAY, Stephane, 3020 Herent (BE); WILLEMS, Kherim, 3051 Sint-Joris-Weert (BE); HENRY, Olivier, 1950 Kraainem (BE)
(74) Representative: Winger

(57) **Abstract**

In a first aspect, the present invention relates to a device (10) for electrochemically synthesizing a plurality of molecules, comprising: (i) one or more electrodes (30) for generating reaction conditions for mediating the synthesis of the molecules, and (ii) a structure (40) having a surface for attaching thereon precursors of the molecules and having a footprint; wherein said surface has an area which is at least 5 times larger than said footprint, preferably at least 20 times, more preferably at 50 times, yet more preferably at least 100 times, most preferably at least 200 times.

## Description

### Technical field of the invention

The present invention relates to the electrochemical synthesis of molecules, and in particular to such synthesis wherein a precursor of the molecules is attached to a surface of a device wherein the synthesis is performed.

### Background of the invention

Electrochemical synthesis of DNA or RNA can be achieved by electrografting onto a Pt or Ru electrode and subsequently cyclically grow the DNA/RNA using the Pt or Ru electrode. More in particular, the Pt or Ru electrode can be used to generate protons, which in turn activate/deprotect the grafted DNA or RNA strand. After activation/deprotection, the grafted strand can then react with (a derivative of) a further nucleotide. This cycle can be repeated to synthesize a DNA or RNA strand of desired length.

For use in e.g. drugs-like mRNA-based vaccines-relatively copious quantities (e.g. in the order of tens of micrograms) are typically needed. However, the amount of DNA/RNA that can be synthesized in the above way within a given device footprint is limited. Generally, an at least tenfold increase in the synthesis density per footprint area should be targeted in order to achieve a good yield within a reasonable chip size.

There is thus still a need in the art for ways to electrochemically synthesize molecules-like DNA or RNA-which can at least partially alleviate this issue.

### Summary of the invention

It is an object of the present invention to provide good devices for electrochemically synthesizing a molecule. It is a further object of the present invention to provide good systems and methods associated therewith. This objective is accomplished by devices, systems and methods according to the present invention.

It is an advantage of embodiments of the present invention that the structure has a surface area usable for synthesizing the molecules that is significantly higher than its footprint. It is a further advantage of embodiment of the present invention that the usable surface area may be increased compared to the footprint by 1, 2 or even more orders of magnitude. It is yet a further advantage of embodiments of the present invention that the achievable synthesis density per unit of footprint is thereby also significantly increased.

It is an advantage of embodiments of the present invention that the function of bearing the precursors is uncoupled from that of generating the reaction conditions.

It is an advantage of embodiments of the present invention that the synthesis can be carried out in an extremely parallelized manner.

It is an advantage of embodiments of the present invention that a fairly high amount of molecules can be synthesized in a single run. It is a further advantage of embodiments of the present invention that the devices and systems therefor can remain relatively small in size.

It is an advantage of embodiments of the present invention that there are multiple ways to realize the structure with high surface area.

It is an advantage of embodiments of the present invention that a plurality of the devices can be integrated on a single substrate.

It is an advantage of embodiments of the present invention that reaction conditions generated for one device can be decoupled from those generated for another device, even if these devices are arranged in series.

It is an advantage of embodiments of the present invention that they can be realized in relatively straightforward and economical fashion.

It is an advantage of embodiments of the present invention that they can be realized using well-established techniques.

It is an advantage of embodiments of the present invention that the precursors can be easily attached to the surface (e.g. using a click chemistry).

It is an advantage of embodiments of the present invention that the synthesized molecules-or at least a desired part thereof-can be easily detached from the surface after the synthesis.

It is an advantage of embodiments of the present invention that the reaction conditions can be well-controlled, and tailored to the synthesis at hand.

The present inventors realized that the approach up to now (cf. the background of the invention) is hitting its limits and that the needed increase in synthesis density cannot readily be achieved in that way. Moreover, they found that simply increasing the surface area of the electrode (within the same footprint) is not straightforward and has several shortcomings.

Instead, they have envisioned that the function of generating the desired reaction conditions and that of bearing the precursors can be uncoupled from one another. Accordingly, they have conceived a synthesis device with on the one hand one or more electrodes for generating the reaction conditions, and on the other hand a high-surface area structure for attaching the precursors thereto.

In a first aspect, the present invention relates to a device for electrochemically synthesizing a plurality of molecules, comprising: (i) one or more electrodes for generating reaction conditions for mediating the synthesis of the molecules, and (ii) a structure having a surface for attaching thereon precursors of the molecules and having a footprint; wherein said surface has an area which is at least 5 times larger than said footprint, preferably at least 20 times, more preferably at 50 times, yet more preferably at least 100 times, most preferably at least 200 times.

In a second aspect, the present invention relates to a system comprising: one or more of the devices according to any embodiment of the first aspect; and one or more fluidic channels for flowing a fluid through the one or more devices.

In a third aspect, the present invention relates to a method for electrochemically synthesizing a molecule using a device according to any embodiment of the first aspect, comprising: (a) attaching precursors of the molecules to the surface of the structure; (b) providing a reagent to the attached precursors while operating the electrodes to generate reaction conditions for mediating a condensation reaction between the reagent and the grafted precursors.

In a fourth aspect, the present invention relates to a method for fabricating a device according to any embodiment of the first or second aspect: (a) providing a first substrate comprising the structure exposed to an external environment, and a second substrate for covering the structure, wherein the first and/or second substrate further comprise one or more of the electrodes; and (b) bonding the second substrate to the first substrate thereby covering the structure.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG 1 schematically depicts a device in accordance with an exemplary embodiment of the present invention
FIG 2 schematically depicts system in accordance with another exemplary embodiment of the present invention, comprising two synthesis devices in series.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

As used herein, and unless otherwise specified, 'empty spaces' within a solid material-such as pores, cells, pockets, channels, etc.-are in general also referred to as 'voids'. It will be clear that 'empty space' does in this context not mean literal vacuum, but the absence of the solid material. In embodiments, the empty space will typically comprise a fluid, such as the synthesis medium.

As used herein, and unless otherwise specified, a "surface (suitable) for attachment" entails not only that the surface's chemistry is suitable therefor, but also that the surface is accessible (e.g. to the precursors) therefor. Likewise, it will be clear that a surface which is (locally) configured such that the desired molecules cannot be synthesized thereon-e.g. because they sterically do not fit-is (locally) not suitable therefor. In embodiments, the surface having an area *x* times larger than the footprint may therefore refer to the usable (i.e. accessible to the precursors and allowing at least one of the molecules to be formed thereon) area-as opposed to e.g. the total area. Notwithstanding, this difference typically only comes into play when the structure comprises voids which are closed (i.e. completely enclosed by the solid material), have an opening which is too small (i.e. such that the precursors can effectively not enter the pore/cell), or which are too small as such (i.e. such that the molecule can effectively not be synthesized therein).

In a first aspect, the present invention relates to a device for electrochemically synthesizing a plurality of molecules, comprising: (i) one or more electrodes for generating reaction conditions for mediating the synthesis of the molecules, and (ii) a structure having a surface for attaching thereon precursors of the molecules and having a footprint; wherein said surface has an area which is at least 5 times larger than said footprint, preferably at least 20 times, more preferably at 50 times, yet more preferably at least 100 times, most preferably at least 200 times.

Within the present invention, the structure is distinct from the one or more electrodes. As such, the surface for attaching thereon the precursors is not a surface of the one or more electrodes. In preferred embodiments, the structure may be physically separated from (i.e. not in direct physical contact with) any of the one or more electrodes. The structure is generally made up of a three-dimensional (3D) configuration of solid material, with 'empty space' (i.e. one or more voids; cf. supra) therebetween.

In embodiments, the structure may comprise a plurality of protrusions and/or indentations. Typically, one could think of protrusions and indentations as forming a kind of continuum between two extremes; i.e. on the one hand 'islands' of the solid material (i.e. the protrusions) in a 'sea' of empty space, and on the other hand 'pockets' of empty space (i.e. indentations) in a sea of solid material. In embodiments, the protrusions may be interconnected (e.g. by means of bridges of the solid material spanning the protrusions), or the indentations may be interconnected (e.g. by means of channels in the solid material spanning the interconnected). In some embodiments, the protrusions may comprise indentations (e.g. pillars with smaller indentations), or the indentations may comprise protrusions (e.g. trenches with smaller protrusions therein.

The protrusions and/or indentations typically protrude/indent from a base plane. They are generally not limited by their shape. In embodiments, the protrusion may for example be pillars or fins. In embodiments, the indentations may for example be holes or trenches. In embodiments, the protrusions and/or indentations may have a cross-section (e.g. parallel to the base plane) which is triangular, rectangular, square, pentagonal, hexagonal, octagonal, circular, oval, etc. The protrusions and/or indentations may typically have one dimension-which may be referred to as the 'height'-perpendicular to the base plane. Furthermore, they may typically have two dimensions perpendicular to the height, the longest of which may be referred to as the 'length' and the shortest as the 'width' (or both as the 'diameter' in case of a circular cross-section). The protrusions and/or indentations may also typically have a pitch (i.e. centre-to-centre distance) and edge-to-edge distance. In embodiments, the height may be from 20 nm to 2 mm, preferably from 200 nm to 500 µm, more preferably from 2 µm to 200 µm, yet more preferably from 10 µm to 100 µm; such as 50 µm. In embodiments, the length may be from 20 nm to 2 mm, preferably from 100 nm to 500 µm, more preferably from 200 nm to 200 µm, yet more preferably from 500 nm to 100 µm; such as 2 µm or 50 µm. In embodiments, the width may be from 20 nm to 100 µm, preferably from 100 nm to 50 µm, more preferably from 200 nm to 20 µm, yet more preferably from 500 nm to 10 µm; such as 2 µm. In embodiments, an aspect ratio of the width to height (i.e. width:height) may be from 1:1 to 1:500, preferably from 1:3 to 1:300, more preferably from 1:5 to 1:200; such as 1:10. In embodiments, the pitch may be from 20 nm to 100 µm, preferably from 100 nm to 50 µm, more preferably from 200 nm to 20 µm, yet more preferably from 500 nm to 10 µm; such as 3 µm. In embodiments, the edge-to-edge distance may be from 20 nm to 100 µm, preferably from 100 nm to 50 µm, more preferably from 200 nm to 20 µm, yet more preferably from 500 nm to 10 µm; such as 1 µm.

The footprint can typically be defined as the area of an orthogonal projection of the structure onto a plane. This plane may for example be a plane parallel to the electrodes and/or to a substrate on which the device is present (i.e. perpendicular to the shortest dimension of the electrodes and/or substrate), or may be another plane that makes sense within the overall system (e.g. in view of the parallelization/multiplexing one wishes to achieve). If no preferred plane can be selected, the footprint may be defined as the area of the largest (i.e. yielding the highest area) orthogonal projection of the structure onto a plane one can make. Thus, the footprint will generally correspond to the area defined by the outer circumference of a planar cut through the structure. This planar cut may preferably be parallel to the electrodes and/or substrate, but may also be at an angle (i.e. different from 0°) to either or both. In embodiments, the footprint may measure from 5 mm² to 5000 mm², preferably from 20 mm² to 2000 mm², more preferably from 50 mm² to 1000 mm², yet more preferably from 100 mm² to 500 mm², such as 200 mm².

In embodiments, the structure may comprise a dielectric. In embodiments, the dielectric may have undergone a surface engineering, such as a surface functionalization and/or a surface coating (cf. infra). In preferred embodiments, the dielectric may be SiO₂. Preferably, the structure may be (chemically) stable in the synthesis medium and under the synthesis conditions. Moreover, it can be convenient for the structure to have stable and accessible groups for attaching the precursors thereto (c.f. infra). Both of these are typically advantageously the case for dielectrics-and in particular SiO₂-, which for example commonly have pendant OH-groups at their surface. Moreover, SiO₂ is advantageously a routine material in industry, that is widely available and well-understood.

In embodiments, the device may comprise: (iii) one or more further electrodes for countering the reaction conditions for mediating the synthesis of the molecules. In this case, the electrodes for generating the reaction conditions and those for countering the reaction conditions may be usefully referred to 'active' and 'counteractive' electrodes, respectively. In embodiments, the counteractive electrode may be fluidically downstream from the active electrodes. For example: in a system (cf. infra) with two devices in series, counteractive electrodes may be provided in between the two devices, e.g. to ensure that the reaction conditions in the second (downstream) device are decoupled from those in the first device (see e.g. Example 2).

In embodiments, the structure may comprise (e.g. may be) a porous structure. In embodiments, the porous structure may for instance be an (open-cell) solid foam. In embodiments, the structure may be both porous and comprise protrusions and/or indentations. For example, the structure may comprise porous protrusions (i.e. protrusion formed of a porous material), or the indentations may be present in a porous material. In embodiments, the porous structure may comprise anodized SiOz (e.g. protrusions of anodized SiOz, or indentations in anodized SiO₂).

In embodiments, the electrodes may comprise a noble metal. In preferred embodiments, the electrodes may comprise Ru or Pt. Pt often shows the best electrochemical performance of any electrode material, but may can be hard to process. Ru is typically slightly less electrochemically robust than Pt, but is easier to fabricate and may therefore overall be preferred. The electrodes may in embodiments preferably be configured with respect to the structure such that the generated reaction conditions are more or less uniformly spread out throughout the 'empty space' around the structure.

In embodiments, the structure may comprise voids and the average size of the voids may be from 20 nm to 20 µm, preferably from 30 nm to 10 µm, more preferably from 40 nm to 5 µm, yet more preferably from 50 nm to 3 µm. In embodiments, the voids may have a size distribution and the average void size may be the mean of said size distribution. In embodiments, the structure may have a void size distribution wherein at least 30% of the voids has a width of from 20 nm to 20 µm (or from 30 nm to 10 µm, 40 nm to 5 µm or 50 nm to 3 µm; cf. supra); preferably at least 50%, more preferably at least 70%, yet more preferably at least 80%, most preferably at least 90%, such as at least 95%. In embodiments, the structure may have a void fraction of from 10% to 90%, preferably from 20% to 80%, more preferably from 30% to 70%, still more preferably from 40% to 60%, such as 50%. As will be well-known to the skilled person, (average) void size, void size distribution, void fraction and other characteristics of void structure are experimentally accessible through various forms of porosimetry, porometry and/or pycnometry. Depending on the type used, these techniques can characterize voids in the order of nm to >10 µm. In preferred embodiments, the (average) void size, void size distribution and/or void fraction may therefore be based on a suitable one of these techniques (e.g. known to be adequate to characterize the void structure under consideration). In other embodiments, the average of the smallest dimension of the voids may be used as the average void size. In order to maximize the amount of the molecules that can be synthesized, it is advantageous if the void structure (e.g. in terms of average void size, void size distribution and void fraction) can be such that a large population of the voids is large enough to be conductive to synthesizing the molecules, without being (exceedingly) overdimensioned (since this would effectively waste useable synthesis space/surface). For example, to give some general guidelines: a void size of 50 nm may be adapted for synthesizing polynucleotides with about 30 nucleotides; 100 nm for up to about 150 nucleotides; and 200 nm for up to about 300 nucleotides.

In embodiments, any feature of any embodiment of the first aspect may independently be as correspondingly described for any embodiment of any of the other aspects.

In a second aspect, the present invention relates to a system comprising: one or more of the devices according to any embodiment of the first aspect; and one or more fluidic channels for flowing a fluid through the one or more devices.

In embodiments, the system may comprise a plurality of the devices fluidically coupled in parallel and/or in series. For example, the devices may be coupled by one or more fluidic channels.

In embodiments, the system (i.e. at least the one or more devices) may be integrated on a single substrate (e.g. a chip).

In embodiments, any feature of any embodiment of the second aspect may independently be as correspondingly described for any embodiment of any of the other aspects.

In a third aspect, the present invention relates to a method for electrochemically synthesizing a molecule using a device according to any embodiment of the first aspect, comprising: (a) attaching precursors of the molecules to the surface of the structure; (b) providing a reagent to the attached precursors while operating the electrodes to generate reaction conditions for mediating a condensation reaction between the reagent and the grafted precursors.

In embodiments, the method may comprise a further step a'-before step a-of: (a') engineering the surface of the structure to facilitate attaching the precursors thereto. In embodiments, engineering the surface may comprise coating the surface (e.g. with a polymer) and/or functionalizing (e.g. silanizing) the surface. In embodiments, engineering the surface may comprise providing functional groups (e.g. an azide functionality) for attaching the precursor thereto. For example, the method might comprise coating the surface with a compound bearing said functional groups or which allow providing said functional groups thereon using a further surface engineering (e.g. a compound with reactive -OH groups). In a further example, the method might comprise silanizing -OH groups (of the solid material such or of the coating) with an organofunctional alkoxysilane bearing the functional group for attaching the precursor thereto.

In some embodiments, the synthesized molecule may comprise a linker (e.g. a sacrificial group) and the molecule of interest. In such embodiment, attaching precursors to the surface may comprise attaching the linkers to the surface. In other embodiments, the precursor may already be a first part of the molecule of interest as such (i.e. the molecule of interest may be synthesized directly onto the (engineered) surface, without an intermediate linker).

In embodiments, attaching precursors to the surface may comprise chemically binding (e.g. grafting) or adsorbing (e.g. physisorbing) the precursor to the surface; preferably chemically binding. In embodiments, attaching the precursors to the surface of the structure may comprise a click reaction. For example, attaching precursors may comprise a click reaction between the precursors and azide functionalities on the surface. In some embodiments, attaching precursors to the surface may be reversible (i.e. the precursors may be detached from the surface, e.g. through an opposite reaction in the case of a chemical binding). In other embodiments, attaching the precursors to the surface may be irreversible (i.e. the precursors may be permanently attached to the surface).

In embodiments, providing the reagent to the attached precursors may comprise providing the reagent in a reaction medium around the attached precursors. In embodiments, providing the reagent to the attached precursors may comprise providing a fluid to the device comprising the precursors. In embodiments, the reagent may be suspended or dissolved in the reaction medium and/or fluid.

In embodiments, generating reaction conditions for mediating the synthesis of the molecules may comprise generating protons (e.g. through the oxidation of hydroquinone); consuming protons (e.g. through the reduction of benzoquinone); generating free radicals (e.g. electrochemically produced from persulfates); generating Cu-ions (e.g. for a further click chemistry) or the generation of divalent cations (e.g. to control an enzymatic reaction). In some embodiments, generating reaction conditions for mediating the synthesis of the molecules may comprise removing a protective group from the precursors.

In embodiments, the reagent may be a nucleotide or a derivative thereof (e.g. bearing a protective group which blocks further reaction after the above condensation reaction). In embodiments, the molecule (and/or the molecule of interest) may be an oligo-or polynucleotide. As used herein, an oligonucleotide is made up of less than 30 nucleotides, while a polynucleotide has 30 nucleotides or more.

In embodiments, the method may comprise a further step c-after step b-of: (c) removing unreacted reagent from the attached precursors (e.g. from the reaction medium). In embodiments, this may for example comprise flushing the reaction medium (e.g. using a fluid which does not comprise the reagent). In embodiments, the method may further comprise repeating step b-and, if present, optionally c. In this case, the molecules synthesized at the end of step b may considered to be attached precursors for the next iteration of step b. In embodiments, step b-and, if present, optionally c-may be repeated from 2 to 500 times, preferably from 10 to 300 times, more preferably from 20 to 200 times. By repeating step b-and optionally step c-, longer molecules can advantageously be synthesized on the surface.

In embodiments, the method may comprise a further step d-after step b or, if present, c-of: (d) detaching at least a portion of the synthesized molecule (e.g. at least the molecule of interest) from the surface. For example, the synthesized molecule as a hole may be detached from the surface (e.g. by reversing the attachment of the precursor thereto; cf. supra), or only a portion of the synthesized molecule may be detached (e.g. by detaching the molecule of interest from the linker or by cleaving the linker).

In embodiments, any feature of any embodiment of the third aspect may independently be as correspondingly described for any embodiment of any of the other aspects.

In a fourth aspect, the present invention relates to a method for fabricating a device according to any embodiment of the first or second aspect: (a) providing a first substrate comprising the structure exposed to an external environment, and a second substrate for covering the structure, wherein the first and/or second substrate further comprise one or more of the electrodes; and (b) bonding the second substrate to the first substrate thereby covering the structure.

In embodiments, the structure may for example be present at a(n exposed) face of the first substrate.

In embodiments, bonding the second substrate to the first substrate may comprise fusion bonding or anodic bonding.

In embodiments, any feature of any embodiment of the fourth aspect may independently be as correspondingly described for any embodiment of any of the other aspects.

The invention will now be described by a detailed description of several embodiments of the invention. It is clear that other embodiments of the invention can be configured according to the knowledge of the person skilled in the art without departing from the true technical teaching of the invention, the invention being limited only by the terms of the appended claims.

### Example 1: Device for electrochemically synthesizing a plurality of molecules

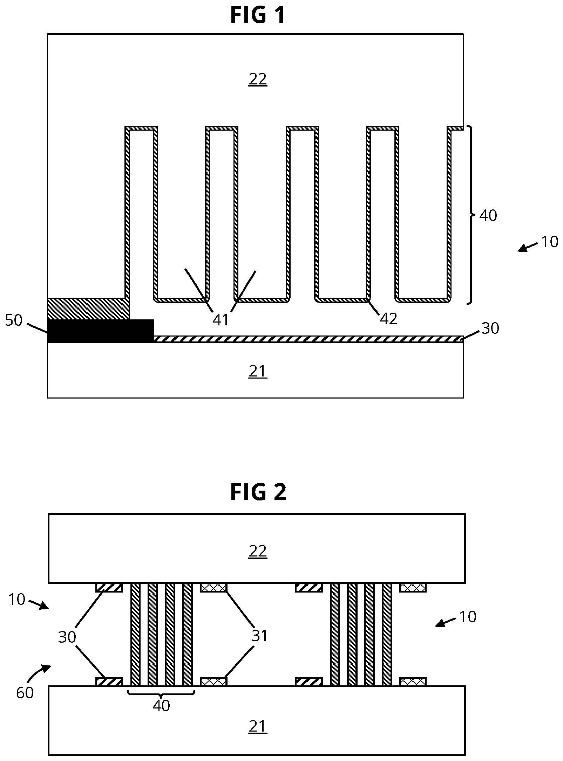

We now refer to FIG 1. illustrating a device (10) for electrochemically synthesizing a plurality of molecules (e.g. DNA/RNA). As depicted, the device (10) comprises a substrate (21) (e.g. Si wafer) with an electrode (30) (e.g. a Pt or Ru electrode) thereon. The electrode (30) allows generating reaction conditions for mediating synthesis of the molecule; for example, the electrode (30) may be for generating protons (e.g. through the oxidation of hydroquinone), which can allow for an (e.g. acid-catalysed) deprotection of precursors to the molecules.

Rather than electrografting the precursors on the electrode (30) though (cf. the background of the invention), the device (10) further comprises a 3D structure (40) therefor that has a significantly higher surface area for the same footprint. For example, the electrode (30) may have a size of 2 mm × 2 mm, while the structure (40) has a usable surface area that is over 10 times higher.

The structure (40) may for example comprise patterning (e.g. etching) a second substrate (22) (e.g. a second Si wafer) to form an array of cylindrical nanopillars (41). A thin dielectric layer (42) (e.g. SiOz) is formed over the etched substrate (22) and the latter is then bonded-e.g. through a SiN layer (50)-to the former substrate (21), such that the structure (40) overhangs the electrode (30) (or vice versa).

The resulting dielectric-coated nanopillars (41) may for example have a height of about 50 µm; a diameter (i.e. length and width) of about 2 µm; a pitch of about 3 µm; and an edge-to-edge distance of about 1 µm.

The dielectric (e.g. SiOz) can be further engineered-such as functionalizing it with azide groups (e.g. by silanization onto the surface -OH groups)-so as to further facilitate attaching the precursors thereto (e.g. allowing to use a click chemistry therefor).

### Example 2: System comprising two synthesis devices in series

We now refer to FIG 2, illustrating a system comprising two synthesis devices (10) coupled by a common fluidic channel (60). These devices (10) can be generally similar as those described that of FIG 1, but are here depicted as comprising two electrodes (30) per device (10) on both sides (i.e. top and bottom) of a fluidic channel (60). This arrangement may help to spread the reaction conditions more uniformly in between the structure (40) (e.g. as compared to only one electrode at either the top or the bottom).

Moreover, behind (i.e. fluidically downstream) each device (10) are counteractive electrodes (31) for undoing the reaction conditions generated at the former (active) electrodes (30) (i.e. for example for capturing protons). In this way, even though they are coupled in series, the reaction conditions generated in the first device (10) need not reach (and thus influence) the second device (10).

It is to be understood that although preferred embodiments, specific constructions, configurations and materials have been discussed herein in order to illustrate the present invention. It will be apparent to those skilled in the art that various changes or modifications in form and detail may be made without departing from the scope of the invention as defined in the appended claims.

## Claims

1. A device (10) for electrochemically synthesizing a plurality of molecules, comprising:
i. one or more electrodes (30) for generating reaction conditions for mediating the synthesis of the molecules, and
ii. a structure (40) having a surface for attaching thereon precursors of the molecules and having a footprint;
wherein said surface has an area which is at least 5 times larger than said footprint, preferably at least 20 times, more preferably at 50 times, yet more preferably at least 100 times, most preferably at least 200 times.

2. The device (10) according to claim 1, wherein the structure (40) comprises a plurality of protrusions and/or indentations.

3. The device (10) according to any of the previous claims, wherein the footprint measures from 5 mm² to 5000 mm², preferably from 20 mm² to 2000 mm², more preferably from 50 mm² to 1000 mm², yet more preferably from 100 mm² to 500 mm².

4. The device (10) according to any of the previous claims, wherein the structure (40) comprises a dielectric, preferably SiO₂.

5. The device (10) according to any of the previous claims, wherein the electrodes (30) comprise a noble metal, preferably Ru or Pt.

6. The device (10) according to any of the previous claims, comprising:
iii. one or more further electrodes (31) for countering the reaction conditions for mediating the synthesis of the molecules.

7. The device (10) according to any of the previous claims, wherein the structure (40) comprises a porous structure.

8. A system comprising:
- one or more of the devices (10) according to any of the previous claims; and
- one or more fluidic channels (60) for flowing a fluid through the one or more devices (10).

9. The system according to claim 8, wherein the system comprises a plurality of the devices (10) fluidically coupled in parallel and/or in series.

10. A method for electrochemically synthesizing a molecule using a device (10) as defined in any of claims 1 to 9, comprising:
a. attaching precursors of the molecules to the surface of the structure (40);
b. providing a reagent to the attached precursors while operating the electrodes (30) to generate reaction conditions for mediating a condensation reaction between the reagent and the attached precursors.

11. The method according to claim 10, wherein the molecule is an oligo- or polynucleotide.

12. The method according to any of claims 10 to 11, wherein step b is repeated from 2 to 500 times, preferably from 10 to 300 times, more preferably from 20 to 200 times.

13. The method according to any of claims 10 to 12, wherein attaching the precursors to the surface of the structure (40) comprises a click reaction.

14. The method according to any of claims 10 to 13, wherein generating reaction conditions for mediating the synthesis of the molecules comprises generating protons.

15. A method for fabricating a device (10) as defined in any of claims 1 to 7 or a system as defined in any of claims 8 to 9, comprising:
a. providing
- a first substrate (21) comprising the structure (40) exposed to an external environment, and
- a second substrate (22) for covering the structure (40),
wherein the first (21) and/or second (22) substrate further comprise one or more of the electrodes (30); and
b. bonding the second substrate (22) to the first substrate (21) thereby covering the structure (40).
